# DEMANDE DE BREVET EUROPEEN

(11) **EP 3 840 099 A1**
(43) Date de publication de la demande: **23.06.2021**
(21) Numéro de dépôt: 20215141.1
(22) Date de dépôt: 17.12.2020
(51) Int. Cl.: H01M 10/0525, H01M 10/613, H01M 10/654, H01M 10/6556, H01M 10/6567, H01M 50/105, H01M 50/129, H01M 50/136

(54) **ACCUMULATEUR ÉLECTROCHIMIQUE, NOTAMMENT UN ACCUMULATEUR MÉTAL-ION, À EMBALLAGE SOUPLE INTÉGRANT UN OU PLUSIEURS ORIFICES DE PASSAGE DE FLUIDE DE REFROIDISSEMENT, MODULE ET PROCÉDÉ DE FABRICATION ASSOCIÉS**

(30) Priorité: 17.12.2019 FR 1914635
(71) Demandeur: Commissariat à l'Energie Atomique et aux Energies Alternatives, 75015 Paris (FR)
(72) Inventeur: VINCENT, Rémi, 38054 GRENOBLE (FR)
(74) Mandataire: Nony

(57) **Abrégé**

L'invention concerne un accumulateur électrochimique (A), notamment un accumulateur métal-ion, comprenant au moins une cellule électrochimique et un emballage souple (6) agencé pour contenir avec étanchéité la au moins une cellule électrochimique tout en étant traversé par une partie des collecteurs de courant formant les bornes de sortie (4, 5) de l'accumulateur, l'emballage souple intégrant dans une zone au-delà de la(des) cellule(s) électrochimique(s), au moins une partie d'au moins un insert rigide (10) en matériau électriquement isolant au moins pour sa(ses) portion(s) à l'intérieur de l'emballage souple, l'insert étant sous la forme d'un tube creux délimitant intérieurement un orifice (8) de passage de fluide de refroidissement.

## Description

### Domaine technique

La présente invention concerne le domaine des accumulateurs électrochimiques, et plus particulièrement des accumulateurs métal-ion.

L'invention vise principalement à améliorer l'efficacité du refroidissement des accumulateurs d'un pack-batterie tout en diminuant le poids du système de refroidissement. Bien que décrite en référence à un accumulateur Lithium-ion, l'invention s'applique à tout accumulateur électrochimique métal-ion, c'est-à-dire également les accumulateurs sodiumion, Magnésium-ion, Aluminium-ion...ou de manière plus générale à tout accumulateur électrochimique.

Un pack-batterie selon l'invention peut être embarqué ou stationnaire. Par exemple, les domaines des transports électriques et hybrides et les systèmes de stockage connectés au réseau peuvent être envisagés dans le cadre de l'invention.

### Technique antérieure

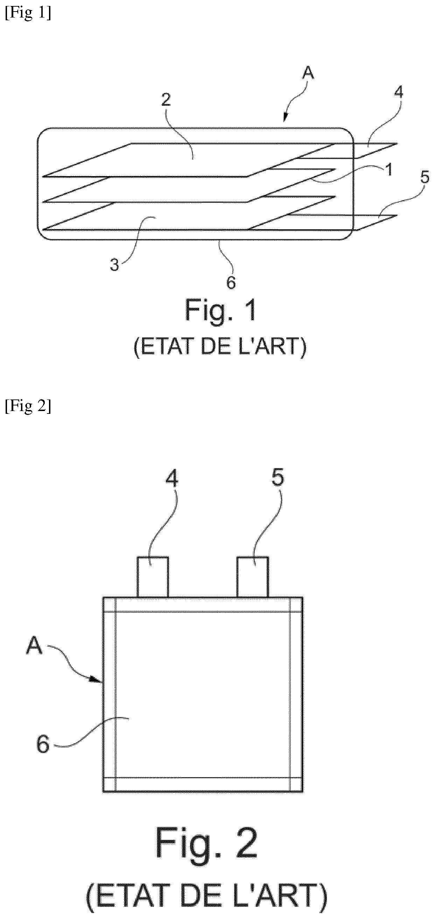

Telle qu'illustrée schématiquement en figures 1 et 2, une batterie ou accumulateur lithium-ion comporte usuellement au moins une cellule électrochimique constituée d'un constituant d'électrolyte 1 entre une électrode positive ou cathode 2 et une électrode négative ou anode 3, un collecteur de courant 4 connecté à la cathode 2, un collecteur de courant 5 connecté à 1' anode 3 et enfin, un emballage 6 agencé pour contenir la cellule électrochimique avec étanchéité tout en étant traversé par une partie des collecteurs de courant 4, 5.

L'architecture des batteries lithium-ion conventionnelles comporte une anode, une cathode et un électrolyte. Plusieurs types de géométrie d'architecture conventionnelle sont connus :
- une géométrie cylindrique telle que divulguée dans la demande de brevet US 2006/0121348,
- une géométrie prismatique telle que divulguée dans les brevets US 7348098, US 7338733;
- une géométrie en empilement telle que divulguée dans les demandes de brevet US 2008/060189, US 2008/0057392, et brevet US 7335448.

Le constituant d'électrolyte 1 peut être de forme solide, liquide ou gel. Sous forme liquide ou gel, le constituant peut comprendre un séparateur en polymère, en céramique ou en composite microporeux imbibé d'électrolyte (s) organique (s) ou de type liquide ionique qui permet le déplacement de l'ion Lithium de la cathode à l'anode pour une charge et inversement pour une décharge, ce qui génère le courant. L'électrolyte est en général un mélange de solvants organiques, par exemple des carbonates dans lesquels est ajouté un sel de lithium typiquement LiPF6.

L'électrode positive ou cathode 2 est constituée de matériaux d'insertion du cation Lithium qui sont en général composite, comme LiFePO₄ (LFP), LiCoO₂ (LCO), LiNiO₂ (LNO), LiMnO₂ ou LiMn₂O₄ (LMO), LiNi_{0.33}Mn_{0.33}Co_{0.33}O₂ (NMC), LiNi_{0.8}Co_{0.15}Al_{0.05}O₂ (NCA). L'électrode négative ou anode 3 est très souvent constituée de carbone graphite ou en Li₄Ti₅O₁₂ (matériau titanate), éventuellement également à base de silicium ou de composite formé à base de silicium.

Le collecteur de courant 4 connecté à l'électrode positive est en général en aluminium.

Le collecteur de courant 5 connecté à l'électrode négative est en général en cuivre, en cuivre nickelé ou en aluminium.

Une batterie ou accumulateur lithium-ion peut comporter bien évidemment une pluralité de cellules électrochimiques qui sont empilées les unes sur les autres.

Traditionnellement, une batterie ou accumulateur Li-ion utilise un couple de matériaux à l'anode et à la cathode lui permettant de fonctionner à un niveau de tension élevé, typiquement égal à 4,4 Volt.

Selon le type d'application visée, on cherche à réaliser soit un accumulateur lithium-ion fin et flexible soit un accumulateur rigide : l'emballage est alors soit souple (appelé « pouch » en langage anglo-saxon), soit rigide et constitue dans ce dernier cas en quelque sorte un boitier.

Les emballages souples sont usuellement fabriqués à partir d'un matériau composite multicouches, constitué d'un empilement de couches d'aluminium recouvertes par un ou plusieurs film(s) en polymère laminés par collage.

Les emballages rigides sont quant à eux utilisés lorsque les applications visées sont contraignantes où l'on cherche une longue durée de vie, avec par exemple des pressions à supporter bien supérieures et un niveau d'étanchéité requis plus strict, typiquement inférieure à 10⁻⁸ mbar.l/s, ou dans des milieux à fortes contraintes comme le domaine aéronautique ou spatial.

Aussi, à ce jour un emballage rigide utilisé est constitué d'un boitier métallique, typiquement en acier inoxydable (inox 316L ou inox 304) ou en aluminium (Al 1050 ou Al 3003), ou encore en titane.

La géométrie de la plupart des boitiers rigides d'emballages d'accumulateurs Li-ion est cylindrique, car la plupart des cellules électrochimiques des accumulateurs sont enroulées par bobinage selon une géométrie cylindrique autour d'un mandrin cylindrique. Des formes prismatiques de boitiers ont également déjà été réalisées par bobinage autour d'un mandrin prismatique.

La demande de brevet FR3004292 décrit l'utilisation de l'intérieur du mandrin en tant que lame d'air pour refroidir à cœur une cellule enroulée d'un accumulateur métal-ion.

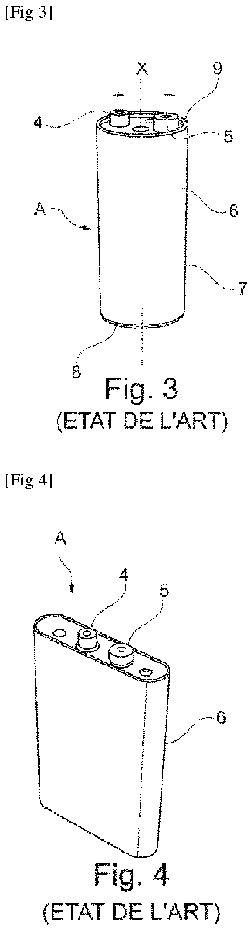

Un des types de boitier rigide de forme cylindrique, usuellement fabriqué pour un accumulateur Li-ion de forte capacité, est illustré en figure 3.

Un boitier rigide de forme prismatique est également montré en figure 4.

Le boitier 6 comporte une enveloppe latérale 7, notamment cylindrique comme montré sur la figure 3, un fond 8 à une extrémité, un couvercle 9 à l'autre extrémité, le fond 8 et le couvercle 9 étant assemblés à l'enveloppe 7. Le couvercle 9 supporte les pôles ou bornes de sortie du courant 4, 5. Une des bornes de sortie (pôles), par exemple la borne négative 5 est soudée sur le couvercle 9 tandis que l'autre borne de sortie, par exemple la borne positive 4, passe à travers le couvercle 9 avec interposition d'un joint non représenté qui isole électriquement la borne positive 4 du couvercle.

Le type de boitier rigide largement fabriqué consiste également en un godet embouti et un couvercle, soudés entre eux sur leur périphérie. En revanche, les collecteurs de courant comprennent une traversée avec une partie faisant saillie sur le dessus du boitier et qui forme une borne aussi appelée pôle apparent de la batterie.

Un pack batterie P est constitué d'un nombre variable d'accumulateurs pouvant atteindre plusieurs milliers qui sont reliés électriquement en série ou en parallèle entre eux et généralement par des barres de connexion, appelées usuellement busbars.

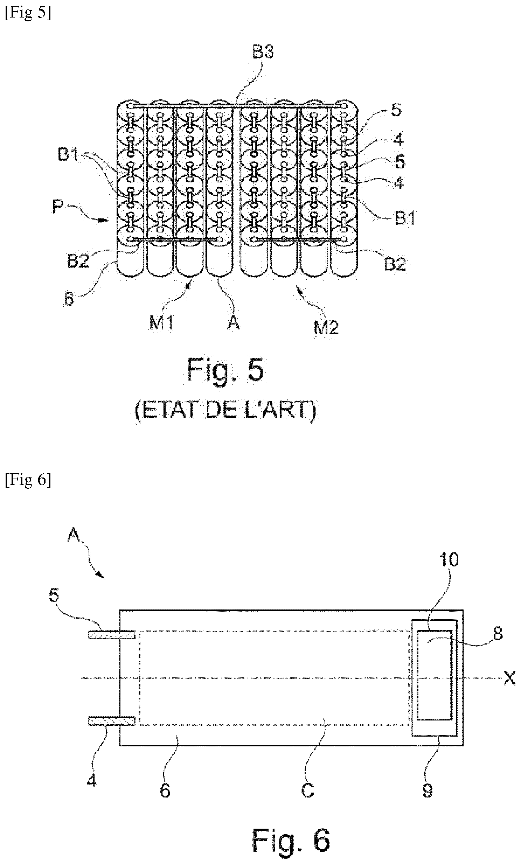

Un exemple de pack-batterie P est montré en figure 5. Ce pack est constitué de deux modules M1, M2 d'accumulateurs Li-ion A identiques et reliés entre eux en série, chaque module M1, M2 étant constitué de quatre rangées d'accumulateurs reliés en parallèle, chaque rangée étant constituée d'un nombre égal à six accumulateurs Li-ion en série.

Comme représenté, la connexion mécanique et électrique entre deux accumulateurs Li-ion d'une même rangée est réalisée par vissage de busbars B1, avantageusement en cuivre, reliant chacune une borne positive 4 à une borne négative 5. La connexion entre deux rangées d'accumulateurs en parallèle au sein d'un même module M1 ou M2 est assurée par un busbar B2, également avantageusement en cuivre. La connexion entre les deux modules M1, M2 est assurée par un busbar B3, également avantageusement en cuivre.

Dans le développement et la fabrication des batteries lithium-ion, pour chaque profil/nouvelle demande, quel que soit les acteurs du marché, cela nécessite des dimensionnements précis (architectures électriques série/parallèle, mécaniques, thermiques...) pour concevoir de manière optimale un pack batterie performant et sûr.

En particulier, la sécurité des accumulateurs lithium-ion doit être prise en considération à la fois à l'échelle d'un accumulateur seul, d'un module et d'un pack-batterie.

Différents dispositifs passifs ou actifs ayant une fonction de sécurité peuvent également être intégrés au niveau d'une cellule (accumulateur), et/ou d'un module et/ou du pack-batterie pour prévenir les problèmes, lorsque la batterie se retrouve dans des conditions dites de fonctionnement abusif ou d'un défaut de fonctionnement d'une cellule.

Un système électrochimique lithium, que ce soit à l'échelle de la cellule (accumulateur), du module ou du pack, produit des réactions exothermiques quel que soit le profil de cyclage donné. Ainsi, à l'échelle d'un accumulateur unitaire, en fonction des chimies considérées, le fonctionnement optimal des accumulateurs lithium ion est limité dans une certaine gamme de température.

Un accumulateur électrochimique doit fonctionner dans une plage de température définie, typiquement généralement inférieure à 70°C à sa surface extérieure de boitier, sous peine de dégrader ses performances, voire même de le dégrader physiquement jusqu'à destruction.

On peut citer pour exemple les accumulateurs lithium de chimie fer-phosphate qui ont une plage de fonctionnement comprise généralement entre -20 °C et +60 °C. Au-delà de 60 °C, les matériaux peuvent subir des dégradations importantes réduisant les performances de la cellule. Au-delà d'une température dite d'emballement thermique pouvant être comprise entre 70°C et 110°C, il y a amorçage de réactions chimiques internes exothermiques. Lorsque l'accumulateur n'est plus capable d'évacuer suffisamment de chaleur, la température de la cellule augmente jusqu'à destruction, ce phénomène étant désigné usuellement sous l'appellation d'emballement thermique (en anglais «*Thermal Runaway*»). Autrement dit, un emballement thermique se produit dans une cellule (accumulateur), lorsque l'énergie dégagée par les réactions exothermiques qui surviennent à l'intérieur de celle-ci, excède la capacité à la dissiper à l'extérieur. Cet emballement peut être suivi d'une génération de gaz et d'explosion et/ou feu.

Également, le maintien d'une température inférieure à 70°C permet d'augmenter la durée de vie d'un accumulateur, car plus la température de fonctionnement d'un accumulateur est élevée, plus sa durée de vie sera diminuée.

En outre, certaines chimies d'accumulateurs requièrent une température de fonctionnement bien au-delà de la température ambiante et par conséquent, il s'avère nécessaire de réguler leur niveau de température par un préchauffage initial des accumulateurs, voire par un maintien en température permanent des accumulateurs.

Dans une batterie, ou pack-batterie à plusieurs accumulateurs Li-ion, la mise en série ou parallèle d'accumulateurs plus ou moins différents peut avoir des conséquences sur les performances et durabilité résultantes pour le pack.

Il est ainsi reconnu que dans un pack-batterie, par exemple de véhicule électrique, les dispersions de vieillissements peuvent être élevées en fonction par exemple de la position des accumulateurs, suite à des dissymétries de vieillissement entre les accumulateurs ou des différences de conditions d'utilisation (variations thermiques entre le cœur et les bords du pack, gradient de courant...). Ainsi, des écarts d'états de santé SOH de l'ordre de 20% entre accumulateurs d'un même pack peuvent être observés.

Aussi, afin de limiter le vieillissement prématuré du pack, il est nécessaire d'optimiser la température de fonctionnement et la dispersion de température d'un accumulateur à l'autre. Un accumulateur (ou des accumulateurs) qui vieillit (vieillissent) plus vite que les autres peut (peuvent) avoir un impact direct sur les performances électriques du pack-batterie complet.

A l'échelle du module et du pack, typiquement en dessous de 0°C par exemple, il peut être nécessaire d'avoir recours à un pilotage particulier via un BMS, afin de limiter la puissance demandée au pack et d'éviter une dégradation des accumulateurs.

On rappelle ici que le BMS (acronyme anglais de « *Battery Management System* ») est utilisé afin de suivre l'état des différents accumulateurs (état de charge, état de santé...) et de piloter les différents éléments de sécurité, tels des courants ne devant pas être trop élevés, des potentiels non adaptés (trop élevés ou trop faibles), des températures limites et a donc notamment pour fonction d'arrêter les applications de courant dès l'atteinte de valeurs de tension seuil, i.e. une différence de potentiels entre les deux matériaux d'insertion actifs.

Au-delà d'une température supérieure, typiquement de l'ordre 70°C, il convient également d'être vigilant car des réactions électrochimiques peuvent conduire à la destruction des accumulateurs unitaires et provoquer une propagation d'un défaut interne à l'accumulateur, typiquement un court-circuit interne, qui peut conduire à l'extrême à la destruction ou l'incendie du pack. Dans ce cas, il est également nécessaire d'avoir recours au BMS, afin de protéger les accumulateurs.

Par conséquent, un pack-batterie nécessite généralement un BMS très performant, qui a également pour rôle de générer des équilibrages de tension.

De même, on comprend bien qu'un pack-batterie thermiquement équilibré est aussi une nécessité.

La difficulté intervient pour assurer l'uniformité de la température au sein d'un pack-batterie. Dans la littérature, les solutions divulguées pour tenter d'assurer une homogénéité de température au sein d'un pack-batterie peuvent être classées essentiellement en trois catégories.

La première catégorie concerne les solutions où on fait circuler un fluide caloporteur (gazeux ou liquide) au sein d'un pack-batterie.

Le brevet US5320190 propose ainsi une circulation d'air pour refroidir un pack-batterie de véhicule, soit en utilisant directement l'air impactant le véhicule lors du roulage, soit en ayant recours à un ventilateur pour les phases en stationnement ou juste après le roulage.

Le brevet CN202259596U propose un pack-batterie qui intègre des distributeurs en air.

Dans la demande de brevet WO2012/165781, il est proposé un système de plaques de guidage d'air qui permet à priori de réduire l'écart de température entre des modules de batteries.

Un liquide de refroidissement peut être utilisé à la place de l'air. Mais, les notions de coût, d'encombrement et de masse supplémentaire peuvent être des facteurs prépondérants en fonction de l'application considérée.

Un refroidissement par air est la solution la moins onéreuse puisque comme indiqué, elle consiste en une ventilation d'air forcée entre les accumulateurs. En revanche, les performances thermiques d'un refroidissement par air sont de faible qualité du fait du coefficient d'échange peu élevé et de sa faible inertie thermique. Ainsi, dans ce type de refroidissement, le premier accumulateur va s'échauffer malgré tout au contact de l'air et la température d'air va augmenter. Au passage du deuxième accumulateur, l'air est plus chaud et l'accumulateur est plus chaud que le premier. Au final, on obtient donc des accumulateurs dont la température est inhomogène et potentiellement trop élevée pour de bonnes conditions de fonctionnement.

Les solutions par refroidissement liquide sont nettement plus efficaces.

Par exemple, les demandes de brevet WO2008/156737, US2011/212356 et US2013/196184 proposent un système de canaux qui épousent chacun une partie de la périphérie de plusieurs accumulateurs cylindriques parallèles les uns aux autres Un liquide caloporteur, tel que de l'eau glycolée s'écoule à l'intérieur de ces canaux pour drainer la chaleur.

Le brevet US8877366 concerne une solution de refroidissement par liquide s'écoulant dans des tubulures externes qui refroidissent par conduction thermique des ailettes insérées entre des accumulateurs.

La deuxième catégorie concerne l'utilisation de plaques froides.

Le brevet US8609268 divulgue ainsi un système de plaque froide à l'intérieur duquel un fluide réfrigérant s'écoule, permettant de drainer la chaleur d'accumulateurs au contact de la plaque froide.

La demande de brevet WO2011/013997 propose des ailettes de refroidissement agencées à l'intérieur d'un empilement de cellules planes pour drainer la chaleur des cellules vers un fluide circulant en bas de l'empilement.

La troisième catégorie concerne le refroidissement par matériau à changement de phase. Ainsi, la demande de brevet US2006/0073377 propose de réguler la température des cellules qui sont noyées au sein du matériau à changement de phase. Le matériau est disposé à l'intérieur d'une enveloppe rigide qui contient les cellules électrochimiques et il comble les espaces entre les cellules adjacentes.

La demande de brevet US2015/0044536 divulgue la réalisation d'une ouverture centrale à travers un boîtier de batterie et de l'ensemble des électrodes empilées à l'intérieur du boîtier. Cette ouverture centrale a pour objectif de pouvoir y loger des composants électroniques. Cette solution ne peut être appliquée qu'à des géométries à empilement. En outre, elle impose de percer les électrodes et de réaliser une étanchéité améliorée autour de l'ouverture centrale.

Comme cela ressort de ce qui précède, le système de gestion thermique d'un pack- batterie est d'une importance cruciale et la durée de vie de chacun des accumulateurs dépend directement de ce système, qui représente un poids et un volume dans le système batterie.

À mesure que le niveau de puissance de charge augmente, en particulier avec des temps de recharge requis plus courts, le système de gestion thermique joue un rôle encore plus important car ils doivent évacuer encore plus de chaleur. Plus particulièrement, pour les applications aux véhicules automobiles, des dispositifs de charge de très grande puissance sont d'ores et déjà annoncés, typiquement à des valeurs de 120 kW et 150 kW pour une charge d'un pack-batterie.

Ainsi, le développement d'un système de refroidissement d'un pack-batterie qui soit à la fois efficace, léger et de volume limité est un enjeu particulièrement important.

Et, toutes les solutions proposées jusqu'à présent ne sont pas complètement satisfaisantes car d'une part le niveau de températures des accumulateurs en fonctionnement peut rester élevé dans certaines configurations et l'homogénéité des températures entre accumulateurs insuffisante et d'autre part le poids des systèmes de refroidissement reste élevé, surtout pour des applications à des véhicules automobiles.

Il existe donc un besoin pour améliorer les solutions de refroidissement d'un pack-batterie d'une pluralité d'accumulateurs électrochimiques, notamment des accumulateurs métal-ion, afin de pallier les inconvénients précités.

Le but de l'invention est de répondre au moins en partie à ce besoin.

### Exposé de l'invention

Pour ce faire, l'invention concerne, sous l'un de ses aspects, un accumulateur électrochimique, notamment un accumulateur métal-ion, comprenant au moins une cellule électrochimique et un emballage souple agencé pour contenir avec étanchéité la au moins une cellule électrochimique tout en étant traversé par une partie des collecteurs de courant formant les bornes de sortie de l'accumulateur, l'emballage souple intégrant, intégrant dans une zone au-delà de la(des) cellule(s) électrochimique(s), au moins une partie d'au moins un insert rigide en matériau électriquement isolant au moins pour sa(ses) portion(s) à l'intérieur de l'emballage souple, l'insert étant sous la forme d'un tube creux délimitant intérieurement un orifice de passage de fluide de refroidissement.

Le tube creux constituant l'insert peut être de section rectangulaire, carrée, ronde, ovale ou autre.

L'accumulateur selon l'invention peut comprendre une cellule électrochimique enroulée à géométrie prismatique, ou une pluralité de cellules électrochimiques empilées les unes sur les autres.

L'insert selon l'invention peut avoir l'une ou l'autre des caractéristiques avantageuses suivantes :
- la hauteur de l'insert est sensiblement égale à l'épaisseur de la (des) cellule(s) électrochimique(s) ;
- l'épaisseur de l'insert étant comprise entre 0,1 et 1 cm ;
- chacune des dimensions transversales de l'orifice délimité intérieurement par l'insert est comprise entre 0,5 et 4 cm.

De préférence, l'insert s'étend le long d'un axe longitudinal parallèle à la direction d'empilement des cellules électrochimiques et/ou perpendiculaire au plan dans lequel la(les) cellule(s) électrochimique(s) s'étend(ent).

De manière générale, la dimension d'un orifice de passage de fluide de refroidissement est définie en fonction du flux de fluide que l'on souhaite faire s'écouler à travers.

Selon un mode de réalisation avantageux, l'emballage souple comprend au moins un joint d'étanchéité agencé sur une face externe de l'enveloppe souple, autour de chaque orifice de passage de fluide de refroidissement. Ce joint extérieur permet de faire directement l'étanchéité.

Selon une caractéristique préférée, l'insert est au moins en partie en polymère électriquement isolant, de préférence choisi parmi le polytétrafluoroéthylène (PTFE), le polyfluorure de vinylidène (PVDF), le polypropylène (PP), ou le polyéthylène (PE).

Selon une variante avantageuse, l'insert en polymère comprend en son sein une couche métallique qui s'étend sur toute la hauteur de l'insert et émerge de part et d'autre de ce dernier.

Selon une application avantageuse, l'emballage souple est constitué d'un empilement de trois couches dont la couche du milieu est métallique, tandis que les couches interne et externe sont en polymère.

Avantageusement encore, l'emballage est un tri-couche polyamide/aluminium/polypropylène. Il peut s'agir de l'emballage souple tri-couche commercialisé par la société MTI corporation: https://www.mtixtl.com/AluminumLaminatedFilm400mmWx7.5mL-EQ-alf-400-7.5M.aspx.

Selon un mode de réalisation avantageux, l'insert intégralement en polymère électriquement isolant est inséré complètement dans l'emballage souple dont les couches sont rabattues et thermo-scellées entre elles dans une zone à l'intérieur du tube.

Alternativement, selon un autre mode de réalisation avantageux, l'insert est inséré en partie dans l'emballage souple avec les couches interne et externe thermo-scellées au polymère de l'insert et la couche métallique dénudée de l'emballage souple soudée à la couche métallique de l'insert.

Selon une première configuration avantageuse, l'insert est intégré dans une zone en extrémité longitudinale ou latérale de la (des) cellule(s) électrochimique(s).

Selon une deuxième configuration avantageuse, l'insert est intégré dans une zone centrale entre deux cellules électrochimiques ou deux groupes de cellules électrochimiques.

L'accumulateur selon l'invention peut être un accumulateur Li-ion dans lequel :
- le matériau d'électrode(s) négative(s) est choisi dans le groupe comportant le graphite, le lithium, l'oxyde de titanate Li₄Ti₅O₁₂, l'oxyde de silicium (SiO₂);
- le matériau d'électrode(s) positive(s) est choisi dans le groupe comportant LiFePO₄ (LFP), LiCoO₂, (LCO), LiNiO₂ (LNO), LiMnO₂ ou LiMn₂O₄ (LMO), LiNi_{0.33}Mn_{0.33}Co_{0.33}O₂ (NMC), LiNi_{0.8}Co_{0.15}Al_{0.05}O₂ (NCA).

L'invention concerne également un module comprenant une pluralité d'accumulateurs électrochimiques tels que décrits précédemment, empilés les uns sur les autres, comprenant une pluralité d'inserts en regard les uns des autres en délimitant intérieurement un conduit de passage de fluide de refroidissement.

De préférence, les inserts s'étendent le long d'un axe longitudinal parallèle à la direction d'empilement des accumulateurs.

Avantageusement, il est prévu au moins un joint d'étanchéité à la jonction entre deux inserts empilés.

L'avantage d'un montage par empilement au sein d'un même module, est qu'on peut conserver un format prismatique standard avec une gestion thermique intégrée.

L'invention concerne enfin un procédé de fabrication d'au moins un accumulateur électrochimique comme décrit précédemment, comprenant les étapes suivantes :
- une fois l'emballage souple positionné autour de l'accumulateur assemblé,
- insertion d'au moins un insert sous la forme d'un tube creux dans l'emballage souple,
- thermo-scellage de la ou de couches en polymère de l'emballage souple à l'intérieur du tube creux ou thermo-scellage des couches polymères de l'emballage souple avec des portions en polymère de l'insert et soudure entre couche métallique de l'emballage souple et couche métallique de l'insert.

En résumé, l'invention consiste essentiellement à intégrer au sein même de l'emballage souple (« pouch ») d'un accumulateur électrochimique, un insert creux qui constitue une portion de conduite étanche de circulation d'un fluide de refroidissement, tel que de l'huile, d'un module ou d'un pack-batterie.

L'insert creux agencé en dehors de la zone électrochimique active, c'est-à-dire hors de l'emplacement de la ou des cellules électrochimiques, va permettre d'assurer une étanchéité parfaite pour le fluide de refroidissement au travers de l'emballage souple d'un accumulateur.

On peut former un circuit de fluide de refroidissement, typiquement de l'huile, propre à chaque accumulateur, ou commun à un ensemble d'accumulateurs assemblés en module avec les conduits du circuit qui sont formés par les inserts creux directement intégrés au sein des emballages souples des accumulateurs.

Toutes les zones des accumulateurs directement à proximité des inserts creux peuvent être refroidies par conduction avec le fluide de refroidissement qui circule dans les inserts.

Par conséquent, l'invention permet de garantir un refroidissement d'un accumulateur, d'un module ou d'un pack-batterie, avec un système qui augmente très peu le poids puisque combiné à la mise en œuvre d'un emballage souple, il met en œuvre des conduits du circuit de refroidissement qui font partie intégrante de celui-ci.

On peut ainsi envisager la réalisation de modules ou de pack-batterie qui sont à la fois légers et qui intègrent un système de refroidissement efficace. Cela est très avantageux pour les pack-batteries, notamment pour des applications aux véhicules automobiles, qui sont destinés à être l'objet de (re)charge électrique de forte puissance, typiquement jusqu'à 150kW voire plus.

L'invention permet donc de s'affranchir de tuyaux de refroidissement rapportés comme selon l'état de l'art dans un pack-batterie. L'implantation de ces tuyaux peut être compliquée et alourdit le poids d'un pack-batterie.

D'autres avantages et caractéristiques de l'invention ressortiront mieux à la lecture de la description détaillée d'exemples de mise en œuvre de l'invention faite à titre illustratif et non limitatif en référence aux figures suivantes.

### Brève description des dessins

[Fig 1] est une vue schématique en perspective éclatée montrant les différents éléments d'un accumulateur lithium-ion.
[Fig 2] est une vue de face montrant un accumulateur lithium-ion avec son emballage souple selon l'état de l'art.
[Fig 3] est une vue en perspective d'un accumulateur lithium-ion selon l'état de l'art avec son emballage rigide constitué d'un boitier de forme cylindrique.
[Fig 4] est une vue en en perspective d'un accumulateur lithium-ion selon l'état de l'art avec son emballage rigide constitué d'un boitier de forme prismatique.
[Fig 5] est une vue en perspective d'un assemblage au moyen de busbars d'accumulateurs lithium-ion selon l'état de l'art, formant un pack-batterie.
[Fig 6] est une vue schématique de face d'un exemple d'accumulateur Li-ion de format prismatique standard, selon l'invention dont l'emballage souple intègre à l'une de ses extrémités longitudinales un insert creux.
[Fig 7] est une vue en coupe longitudinale d'un module à deux d'accumulateurs empilés selon l'invention, avec inserts en regard l'un de l'autre.
[Fig 8] est une vue de face d'un mode de réalisation d'accumulateur Li-ion de format prismatique standard, selon l'invention, dont l'emballage souple intègre à chacune de ses extrémités longitudinales un insert creux.
[Fig 9] est une vue de face d'un mode de réalisation d'accumulateur Li-ion de format prismatique standard, selon l'invention, dont l'emballage souple intègre à chacune de ses extrémités latérales un insert creux.
[Fig 10] est une vue en coupe longitudinale d'un module à deux d'accumulateurs empilés selon l'invention, avec inserts en regard l'un de l'autre, la figure 10 montrant une première variante de réalisation des étanchéités de l'emballage souple autour des inserts.
[Fig 11] est une vue en coupe longitudinale d'un module à deux d'accumulateurs empilés selon l'invention, avec inserts en regard l'un de l'autre, la figure 11 montrant une deuxième variante de réalisation des étanchéités de l'emballage souple autour des inserts.
[Fig 12] est une vue de face d'un mode de réalisation d'accumulateur Li-ion de format prismatique standard, selon l'invention, dont l'emballage souple intègre dans sa zone centrale un insert creux.
[Fig 13] est une vue en coupe longitudinale d'un module à deux d'accumulateurs empilés selon la figure 12, avec inserts en regard l'un de l'autre, la figure 13 montrant la deuxième variante de réalisation des étanchéités de l'emballage souple autour des inserts.
[Fig 14] est une vue de face d'un mode de réalisation avantageux d'accumulateur Li-ion de format prismatique standard, selon l'invention, dont l'emballage souple intègre à chacune de ses extrémités longitudinales un insert creux, les inserts creux étant reliés fluidiquement entre eux par des canaux imprimés sur la face externe de l'emballage souple.

### Description détaillée

Les figures 1 à 5 sont relatives à des exemples différents d'accumulateur Li-ion, d'emballage souple et boitiers d'accumulateurs ainsi qu'un pack-batterie selon l'état de l'art. Ces figures 1 à 5 ont déjà été commentées en préambule et ne le sont donc pas plus ci-après.

Par souci de clarté, les mêmes références désignant les mêmes éléments selon l'état de l'art et selon l'invention sont utilisées pour toutes les figures 1 à 13.

Dans les figures 6 à 13, les pointillés délimitent des zones actives, c'est-à-dire d'emplacement d'une ou plusieurs cellules électrochimiques au sein d'un accumulateur.

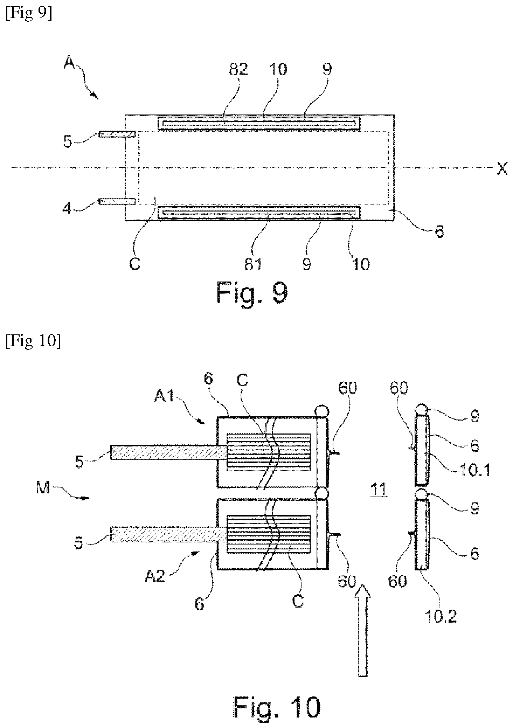

Dans les figures 10, 11, 13, le flèches symbolisent le sens d'un flux de liquide de refroidissement au sein des inserts creux conformes à l'invention.

On a représenté en figures 6, un exemple d'accumulateur A de type Li-ion de format prismatique standard, d'axe longitudinal X comprenant un emballage souple (« pouch ») 6 qui est ici rallongée au-delà de la zone active de l'accumulateur, c'est-à-dire au-delà de l'emplacement de la cellule électrochimique C, symbolisée par des pointillés en figure 6, d'une zone au sein de laquelle est inséré un insert sous la forme d'un tube creux 7 dont l'intérieur forme un orifice étanche 8 pour le passage d'un liquide de refroidissement d'un module ou d'un pack-batterie dans lequel l'accumulateur est intégré.

L'emballage souple 6 selon l'invention est de préférence un empilement de trois couches dont la couche du milieu est une couche métallique, tandis que les couches interne et externe sont en polymère. Il peut s'agir d'un tri-couche polyamide/aluminium/polypropylène.

L'insert creux 10 illustré en figure 6 est intégralement en polymère, qui peut être du PTFE, du PVDF, du PP, du PE. Mais comme détaillé ci-après, l'insert creux 10 peut être sous la forme d'un corps en polymère électriquement isolant dans lequel est noyé une couche électriquement conductrice qui émerge du corps par ses extrémités longitudinales.

Dans cet exemple illustré en figure 6, l'insert creux 10 est inséré à l'une des extrémités longitudinales de l'emballage souple 6.

Un joint d'étanchéité 9, par exemple un joint torique typiquement en silicone, peut être rapporté autour de l'insert creux 10 sur la face externe de l'emballage souple 6 pour pouvoir réaliser l'étanchéité entre deux accumulateurs électrochimiques que l'on empile.

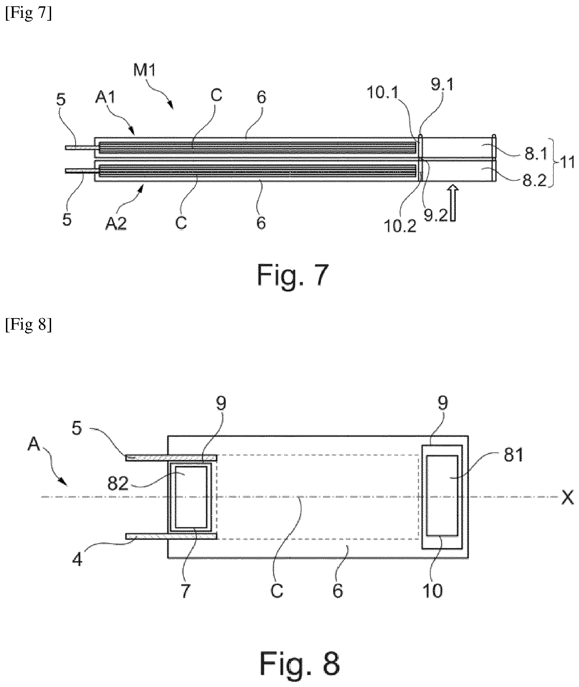

Cela est illustré en figure 7 qui montre un module M à deux accumulateurs identiques A1, A2 empilés l'un sur l'autre avec leurs inserts 10.1, 10.2 en regard l'un de l'autre avec un joint d'étanchéité 9 agencé autour d'eux à l'interface entre les deux emballages souples 6.

Les orifices 8.1, 8.2 délimités par les inserts creux 10.1, 10.2 définissent une portion de conduite étanche 11 du fluide du système de refroidissement du module.

Les figures 8 et 9 montrent chacune l'intégration de deux inserts creux 10 au sein d'un même accumulateur électrochimique. On implante ainsi deux orifices 81, 82 de passage de fluide de refroidissement à travers un même emballage souple d'accumulateur. Un des orifices 81 peut être celui d'un conduit d'alimentation du fluide de refroidissement tandis que l'autre sert à évacuer le fluide ayant servi au refroidissement ou vice-et-versa.

Dans le mode de la figure 8, les inserts creux 10 sont intégrés chacun à une extrémité longitudinale de l'emballage souple 6. On veille dans ce cas à adapter le design de l'orifice 82 par rapport au positionnement des bornes de sortie 4, 5.

Dans le mode de la figure 9, les inserts creux 10 sont intégrés chacun à une extrémité latérale de l'emballage souple 6.

De fait, lorsqu'on empile plusieurs accumulateurs A1, A2 réalisés avec les inserts creux 10.1, 10.2 on reconstitue en quelque sorte des clarinettes 10 d'alimentation et d'évacuation de fluide de refroidissement.

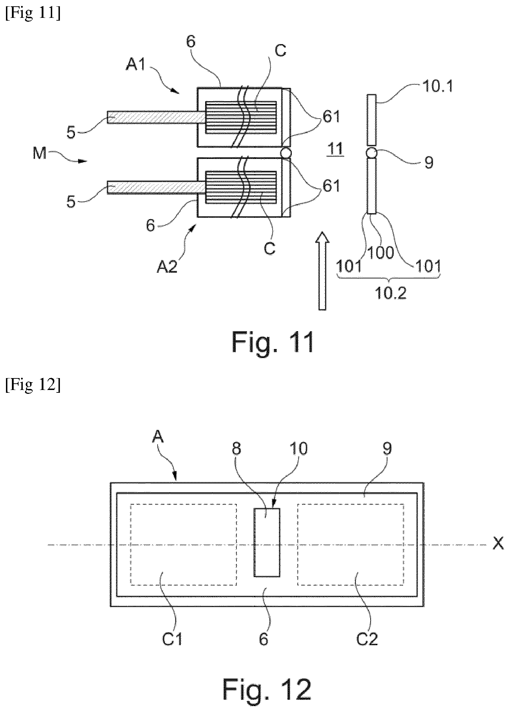

Les figures 10 et 11 montrent deux variantes alternatives pour réaliser des étanchéités d'un l'emballage souple 6 autour des inserts creux 10.1, 10.2 du module M1.

Dans la variante illustrée en figure 10, les inserts creux 10.1, 10.2 sont intégralement en polymère électriquement isolant et sont chacun insérés complètement dans l'emballage souple 6. Les couches de l'emballage souple 6 sont rabattues et thermo-scellées entre elles dans une seule zone 60 à l'intérieur du tube.

La variante de la figure 11 consiste à utiliser un insert creux 10.1, 10.2 avec une couche métallique 100 introduite dans le corps 101 de l'insert qui est polymère isolant. La couche métallique 100 s'étend sur toute la hauteur de l'insert et émerge de part et d'autre du corps. Selon cette variante, les couches interne et externe de l'emballage souple 6 sont thermo-scellées au corps polymère 101 de l'insert et la couche métallique dénudée de l'emballage souple 6 est soudée à la couche métallique 100 de l'insert. Comme schématisé en figure 11, les deux zones thermo-scellées et soudées 61 sont sur les bords longitudinaux des inserts 10.1, 10.2. Cette variante de la figure 11 peut être avantageuse lorsqu'on souhaite augmenter l'étanchéité des accumulateurs à la diffusion des molécules d'eau.

La figure 12 montre un mode de réalisation où un insert creux 10 est inséré dans une zone centrale d'un accumulateur. Comme illustré, l'insert creux 10 délimite un orifice 8 de passage de fluide de refroidissement entre deux cellules C1, C2 ou deux groupes de cellules électrochimiques.

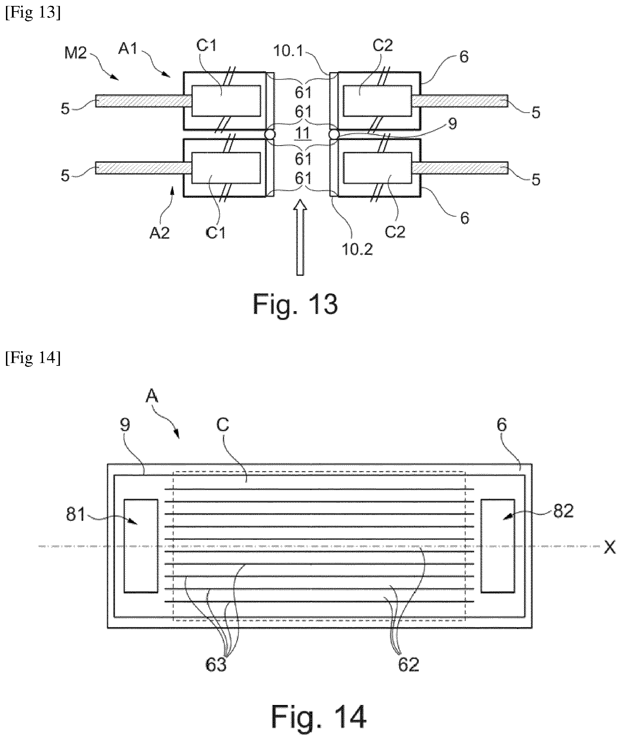

La figure 13 montre un module M2 réalisé avec deux accumulateurs A1, A2 comme selon la figure 12 et avec des étanchéités 61 mixtes par thermo-scellage et soudage comme selon la figure 11.

La figure 14 montre un mode de réalisation avantageux selon lequel les faces principales externes de l'emballage souple 6 présentent des canaux 62 qui ont été réalisés par impression directe de nervures 63 délimitant lesdits canaux 62.

Tel qu'illustré, ces canaux 62 sont rectilignes et parallèles entre eux.

L'impression peut par exemple être réalisée par sérigraphie avec des écrans aux designs spécifiques. On peut aussi procéder avec des équipements de dépôts directs par cordons.

La géométrie des nervures 63 et des canaux 62 ainsi imprimée peut varier de 0,5 à 20 mm en fonction du dimensionnement du refroidissement et de la perte de charge souhaités. Bien évidemment, le dimensionnement des canaux 62 se fait en fonction de la viscosité du fluide de refroidissement choisi, tel que de l'huile et de la géométrie intrinsèque aux accumulateurs et ce afin d'optimiser la perte de charge dans chaque volume de circulation de fluide autour de l'accumulateur.

En fonction du type d'emballage souple et du montage des circuits de refroidissement, individuellement autour d'un accumulateur ou en module, les matériaux imprimés peuvent présenter des caractéristiques diverses et variés. Par exemple, les nervures 63 peuvent être en silicone, polyuréthane, acrylique ou styrène butadiène ou en polyfluorure de vinylidène ou en une combinaison de ceux-ci.

On veille bien évidemment à ce que les matériaux et le dimensionnement mis en œuvre pour la réalisation des canaux soient définis pour respecter les chaines de côtes des assemblages des accumulateurs individuellement ou au sein de modules. Par exemple, même si une variation de l'épaisseur totale, i.e. avec les canaux de refroidissement, peut être considérée comme conséquente sur un emballage souple 6 usuel, de fait, la surépaisseur engendrée n'est pas gênante. En effet, la mise en place de joints 9 et/ou de nervures 63 en matériau compressibles, typiquement en silicone peut conférer une liberté dans les chaînes de côtés à respecter. En outre, pour obtenir une meilleure étanchéité périphérique, on préfèrera mettra en œuvre des joints 9 plus compressibles que les nervures 63.

A chacune des extrémités longitudinales de l'enveloppe souple 6, une zone prolongée intègre un insert creux 10 délimitant un orifice d'entrée 81 et un orifice de sortie 82 de fluide de refroidissement autour de l'emballage souple 6, qui sont entre eux par les canaux 62.

Ainsi, selon ce mode, le fluide de refroidissement peut pénétrer dans l'orifice d'entrée 81 délimité puis circuler dans les canaux 62 directement au contact de l'emballage souple 6 et être évacué par l'orifice de sortie 82.

D'autres variantes et améliorations peuvent être envisagées sans pour autant sortir du cadre de l'invention.

Par exemple, si dans l'ensemble des exemples illustrés, les insert creux 10 sont à section interne rectangulaire, on peut envisager n'importe quelle section : carrée, ronde, elliptique ou autre.

Tout emballage souple qui convient pour faire l'étanchéité d'un accumulateur électrochimique peut convenir dans le cadre de l'invention. En particulier, les emballages souple tri-couches avec couche du milieu qui est métallique convient parfaitement car elle peut être soudé à une partie métallique d'un insert creux.

## Revendications

1. Accumulateur électrochimique (A), notamment un accumulateur métal-ion, comprenant au moins une cellule électrochimique et un emballage souple (6) agencé pour contenir avec étanchéité la au moins une cellule électrochimique tout en étant traversé par une partie des collecteurs de courant formant les bornes de sortie (4, 5) de l'accumulateur, l'emballage souple intégrant dans une zone au-delà de la(des) cellule(s) électrochimique(s), au moins une partie d'au moins un insert rigide (10) en matériau électriquement isolant au moins pour sa(ses) portion(s) à l'intérieur de l'emballage souple, l'insert étant sous la forme d'un tube creux délimitant intérieurement un orifice (8) de passage de fluide de refroidissement, l'insert étant agencé hors de l'emplacement de la ou des cellules électrochimiques,
la hauteur de l'insert étant sensiblement égale à l'épaisseur de la (des) cellule(s) électrochimique(s).

2. Accumulateur électrochimique (A) selon la revendication 1, comprenant une cellule électrochimique enroulée à géométrie prismatique.

3. Accumulateur électrochimique (A) selon la revendication 1, comprenant une pluralité de cellules électrochimiques empilées les unes sur les autres.

4. Accumulateur électrochimique (A) selon l'une des revendications précédentes, l'épaisseur de l'insert étant comprise entre 0,1 et 1 cm.

5. Accumulateur électrochimique (A) selon l'une des revendications précédentes, chacune des dimensions transversales de l'orifice délimité intérieurement par l'insert étant comprise entre 0,5 et 4 cm.

6. Accumulateur électrochimique (A) selon l'une des revendications précédentes, l'emballage souple comprenant au moins un joint d'étanchéité (9) agencé sur une face externe de l'enveloppe souple, autour de chaque orifice de passage de fluide de refroidissement.

7. Accumulateur électrochimique (A) selon l'une des revendications précédentes, l'insert étant au moins en partie en polymère électriquement isolant, de préférence choisi parmi le polytétrafluoroéthylène (PTFE), le polyfluorure de vinylidène (PVDF), le polypropylène (PP), ou le polyéthylène (PE), l'insert en polymère comprenant de préférence en son sein une couche métallique (100) qui s'étend sur toute la hauteur de l'insert et émerge de part et d'autre de ce dernier.

8. Accumulateur électrochimique (A) selon l'une des revendications précédentes, l'emballage souple étant constitué d'un empilement de trois couches dont la couche du milieu est une couche métallique, tandis que les couches interne et externe sont en polymère, l'emballage étant de préférence un tri-couche polyamide/aluminium/polypropylène.

9. Accumulateur électrochimique (A) selon l'une des revendications 7 et 8, l'insert intégralement en polymère électriquement isolant étant inséré complètement dans l'emballage souple dont les couches sont rabattues et thermo-scellées entre elles dans une zone à l'intérieur du tube.

10. Accumulateur électrochimique (A) selon la revendication 7 en combinaison avec la revendication 8, l'insert étant inséré en partie dans l'emballage souple avec les couches interne et externe thermo-scellées au polymère de l'insert et la couche métallique dénudée de l'emballage souple soudée à la couche métallique de l'insert.

11. Accumulateur électrochimique (A) selon l'une des revendications précédentes, l'insert étant intégré dans une zone en extrémité longitudinale ou latérale de la (des) cellule(s) électrochimique(s).

12. Accumulateur électrochimique (A) selon l'une des revendications précédentes, l'insert étant intégré dans une zone centrale entre deux cellules électrochimiques ou deux groupes de cellules électrochimiques.

13. Accumulateur électrochimique (A) selon l'une des revendications précédentes, étant un accumulateur Li-ion dans lequel :
- le matériau d'électrode(s) négative(s) est choisi dans le groupe comportant le graphite, le lithium, l'oxyde de titanate (Li₄Ti₅O₁₂), l'oxyde de silicium (SiO₂);
- le matériau d'électrode(s) positive(s) est choisi dans le groupe comportant LiFePO₄(LFP), LiCoO2 (LCO), LiNiO₂ (LNO), LiMnO₂ ou LiMn₂O₄ (LMO), LiNi_{0.33}Mn_{0.33}CO_{0.33}O₂ (NMC), LiNi_{0.8}Co_{0.15}Al_{0.05}O₂ (NCA).

14. Module (M1, M2) comprenant une pluralité d'accumulateurs électrochimiques (A1, A2) selon l'une des revendications précédentes empilés les uns sur les autres, comprenant une pluralité d'inserts (10.1, 10.2) en regard les uns des autres en délimitant intérieurement un conduit (11) de passage de fluide de refroidissement, et comprenant de préférence au moins un joint d'étanchéité (9) à la jonction entre deux inserts empilés.

15. Procédé de fabrication d'au moins un accumulateur électrochimique selon l'une des revendications 1 à 13, comprenant les étapes suivantes :
- une fois l'emballage souple (6) positionné autour de l'accumulateur assemblé,
- insertion d'au moins un insert sous la forme d'un tube creux (7) dans l'emballage souple,
- thermo-scellage de la ou de couches en polymère de l'emballage souple à l'intérieur du tube creux ou thermo-scellage des couches polymères de l'emballage souple avec des portions en polymère de l'insert et soudure entre couche métallique de l'emballage souple et couche métallique de l'insert.
